# EUROPÄISCHE PATENTSCHRIFT

(11) **EP 0 756 551 B1**
(45) Veröffentlichungstag und Bekanntmachung des Hinweises auf die Patenterteilung: **24.02.1999**
(21) Anmeldenummer: 96900969.5
(22) Anmeldetag: 16.01.1996
(51) Int. Cl.: B62D 5/22

(54) **LENKGETRIEBE**
STEERING GEAR
MECANISME DE DIRECTION

(30) Priorität: 20.01.1995 DE 19501647
(43) Veröffentlichungstag der Anmeldung: 05.02.1997
(73) Patentinhaber: TRW Fahrwerksysteme GmbH & Co. KG, 40547 Düsseldorf (DE)
(72) Erfinder: PFEIFER, Arnd, D-47877 Willich (DE)
(74) Vertreter: Stenger, Watzke & Ring Patentanwälte
(86) Internationale Anmeldenummer: EP9600274
(87) Internationale Veröffentlichungsnummer: WO9622213

(56) Entgegenhaltungen:
- EP-A- 0 144 259

## Beschreibung

Die Erfindung betrifft ein Lenkgetriebe mit einer mit Hydraulikdruck beaufschlagbaren Zylinder-/Kolbenanordnung, einem mit einem Ritzel einer Lenkung in Eingriff bringbaren Zahnsegment und einer Spurstangenanbindung.

Solche Lenkgetriebe sind im praktischen Einsatz aus dem Stand der Technik bekannt und umfassen ein Lenkgehäuse, in welchem ein mit diesem fest verbundener Zylinder angeordnet ist, in welchem ein beidseitig mit Hydraulikdruck beaufschlagbarer Kolben beweglich eingesetzt ist. Auf jeder Seite des Kolbens ist eine Kolbenstange angeordnet, welche seitlich aus dem Zylinder und dem Lenkgehäuse herausragt. An den Enden der beiden Kolbenstangen ist eine Spurstangenanbindung ausgebildet, beispielsweise in Form eines Befestigungsflansches. Auf einer Seite ist eine der Kolbenstangen so ausgebildet, daß sie aus dem Zylinder ragend noch über eine bestimmte Länge im Gehäuse verläuft. In diesem Bereich weist die Kolbenstange eine Verzahnung auf, mit welchem sie im Eingriff mit dem Ritzel einer Lenkung ist. Das Ritzel ist üblicherweise Bestandteil einer Servolenkeinheit, so daß das Lenkgetriebe die Drehbewegung einer Lenkung über das Ritzel mechanisch, und zugleich über die Zylinder-/Kolbenanordnung hydraulisch unterstützt, überträgt. Die beschriebene Anordnung kann so ausgeführt sein, daß auf ein asymmetrisch ausgebildetes Kolbenstangenelement ein Kolben aufgepreßt ist. Damit nach beiden Seiten ein voller Lenkausschlag möglich ist, erfordern herkömmliche Lenkgetriebe eine Mindestbaulänge von der sechsfachen Hublänge. Eine Reduzierung dieser Baulänge ist praktisch nicht möglich. Üblicherweise wird das Lenkgetriebe ortsfest mit dem Gehäuse an einem Fahrzeug montiert. Die beiden Spurstangenanbindungen am Ende der beiden Kolbenstangen werden mit Spurstangen verbunden und über die Kolbenstangenbewegung eine Lenkung bewirkt.

Die Ausbildung des Zahnsegmentes an einer der Kolbenstangen macht die Verwendung unsymmetrischer Teile erforderlich, das heißt auf beiden Seiten des Kolbens werden unterschiedliche Bauelemente verwendet. Der Kolben ist hinsichtlich seiner Bauweise festgelegt, ebenso wie die Herstellung der Verzahnung an der Kolbenstange. Kolben und Kolbenstangenbaugruppe müssen exakt aufeinander abgestimmt sein.

Der geschilderte Aufbau macht einen hydraulischen Druckanschluß aufwendig. Üblicherweise werden Leitungen an das Gehäuse herangeführt und durch dieses hindurch an die beiden Zylinderkammern angeschlossen.

Die EP 0 144 259 B1 offenbart ein Lenkgetriebe der gattungsgemäßen Art. Innerhalb eines Lenkgehäuses ist ein gegenüber einem ortsfesten Kolben aufgrund Hydraulikdruckbeaufschlagung bewegbarer Zylinder angeordnet. Dieser Zylinder wird mittels eines Druckstückes in Richtung einer Gehäusewandung gehalten, an welcher ein Ritzelgehäuse ausgebildet ist. Im Eingriff mit dem Ritzel ist eine Verzahnung innerhalb des Gehäuses angeordnet, welche gegenüber dem Zylinder elastisch positioniert ist. Zwangsläufig weist der Zylinder daher an einer anderen Stelle einen Sockelblock für eine Spurstangenanbindung auf.

Aus der DE-OS 19 33 403 ist eine Lenkeinrichtung für Motorfahrzeuge bekannt, wobei eine mit lenkbaren Rädern direkt verbundene Zahnstange, die mit dem Ritzel einer Lenkung verbunden ist, durch ein zu dieser parallel liegendes längliches Glied ergänzt ist, welches mit der Zahnstange in Verbindung steht, so daß sich das längliche Glied zusammen mit der Zahnstange bewegt. Die DE-OS 19 33 403 offenbart, daß in einem parallelen Gehäusesegment auch eine Hydraulikunterstützung derart stattfinden kann, daß das Gehäuseelement sich gegenüber einem durch Stangen ortsfest gehaltenen Kolben hin und her bewegt und somit die Zahnstange mitbewegt.

Das beschriebene, zum Stand der Technik gehörende Lenkgetriebe ist hinsichtlich der Herstellung und der Montage aufwendig, macht eine große Mindestbaulänge erforderlich und ist hinsichtlich seiner Einstellung und der Abstimmung der einzelnen Elemente aufeinander kompliziert. Auch die aus der gattungsbildenden EP 0 144 259 B1 bekannte Vorrichtung ist kompliziert, da das Zahnstangensegment gegenüber dem Zylinder elastisch gelagert ist. Somit ergibt sich ein zusätzliches Spurstangenanbindungserfordernis und somit ein erheblicher Herstellungs- und Montageaufwand.

Davon ausgehend liegt der vorliegenden Erfindung die **Aufgabe** zugrunde, ein Lenkgetriebe der gattungsgemäßen Art dahingehend weiterzubilden, daß dieses hinsichtlich seiner Baulänge reduziert und hinsichtlich des Herstellungs- und Montageverfahrens vereinfacht werden kann.

Zur technischen **Lösung** dieser Aufgabe wird vorgeschlagen, daß die Verzahnung durch ein auf der Zylinderaußenseite befestigtes Zahnsegment gebildet ist, in das eine Spurstangenanbindung integriert ist.

Durch die vorteilhafte integrale Bauweise von Zahnsegment und Spurstangenanbindung kann das erfindungsgemäße Lenkgetriebe überaus einfach hergestellt und montiert werden.

Bei dem erfindungsgemäßen Lenkgetriebe befindet sich die für die mechanische Verbindung von Lenkrad und Rädern erforderliche Verzahnung sowie die erforderliche Spurstangenanbindung an einem Segment an der Außenseite des Hydraulikzylinders, in welchem der zur Lenkunterstützung benötigte Druck auf die Kolbenstange übertragen wird. Durch den erfindungsgemäßen Aufbau ist eine Baulängenverkürzung um mindestens den zweifachen Hub möglich, da die zwei erforderlichen Baulängen für die Zahnstange entfallen, die ursprünglich an den Kolbenstangen angeordnet war. In vorteilhafter Weise kann die Verzahnung als separates Zahnsegment ausgebildet und auf der Zylinderaußensete angeordnet werden. Die Verzahnung kann an der Außenseite des Zylinders auch bei dessen Herstellung ausgebildet sein. Das Zahnsegment kann geschraubt, genietet, geklebt oder formend ausgebildet sein. Mit Vorteil wird vorgeschlagen, das Zahnsegment kaltumformend oder durch Sintern herzustellen. Gleichzeitig kann das Zahnsegment gemäß einer vorteilhaften Ausgestaltung der Erfindung in integraler Bauweise eine Spurstangenanbindung aufweisen, welche in vorteilhafter Weise durch eine Bohrung, einen Bolzen oder dergleichen gebildet ist. Der Zylinder hat in vorteilhafter Weise einen rohrförmigen Querschnitt und weist seitliche, gegen die Kolbenstangen wirkende Dichtungen auf.

In dem Zylinder ist ein Kolben angeordnet, der in vorteilhafter Weise auch symmetrisch ausgebildet sein kann und welcher in vorteilhafter Weise durch Kaltumformen oder durch Sintern hergestellt ist. An dem Kolben ist wenigstens eine aus dem Zylinder ragende Kolbenstange angeordnet, welche gemäß einem Vorschlag der Erfindung ortsfest in einem Fahrzeug mit ihrem Ende befestigt ist. Werden an beiden Seiten des Kolbens Kolbenstangen angeordnet, können diese in vorteilhafter Weise jeweils eine zweifache Hublänge aufweisen, so daß sich eine Gesamtbaulänge von vier Hublängen ergibt. Mit besonderem Vorteil ermöglicht die Erfindung die Verwendung von symmetrischen Kolbenstangenanordnungen auf beiden Seiten des Kolbens. Die Kolbenstangen können einen rohrförmigen Querschnitt haben, insbesondere können Rohre verwendet werden. Die Enden weisen in vorteilhafter Weise sogenannte Befestigungspunkte auf, soweit die Kolbenstangen außerhalb des Zylinders befestigt werden. Kolbenseitig können die rohrförmigen Kolbenstangen durch das Kolbenelement verschlossen werden. Die Verbindung zwischen Kolben und Kolbenstange kann durch Verschrauben, Fressen, Klemmen, Schweißen oder dergleichen erfolgen. Mit besonderem Vorteil wird vorgeschlagen, daß die Druckzufuhr zu der jeweiligen Zylinderseite über die als Hohlprofil ausgebildeten Kolbenstangen erfolgen kann. In besonders vorteilhafter Weise erfolgt die Druckzufuhr über das Befestigungsauge durch eine Hohlschraube in das Kolbenstangeninnere. Alternativ ist es auch möglich, eine Ölzufuhr zum Zylinder über eine oder mehrere radiale Nuten an den jeweiligen Kolbenseiten zu bewirken.

Mit Vorteil wird vorgeschlagen, daß der Zylinder in einem Gehäuse angeordnet ist, welches wenigstens so breit ist, daß es ein mit der Verzahnung kämmendes Ritzel aufnehmen kann. Das Gehäuse kann damit sehr schmal ausgestaltet sein und in vorteilhafter Weise dem Ritzel gegenüberliegend ein Druckstück aufweisen, um eine Anpressung des Ritzels an die zylinderseitige Verzahnung zu bewirken. Selbstverständlich kann die Verzahnung auch in einer seitlichen Zylinderverlängerung angeordnet sein, so daß sich das Gehäuse auf einen kleinen Klemmbereich, beispielsweise um eine Verzahnungsstange, reduziert.

Mit der erfindungsgemäßen Ausgestaltung eines Lenkgetriebes kann dieses hinsichtlich der Baulänge erheblich reduziert und überaus einfach hergestellt und montiert werden. Es können beispielsweise gesinterte Elemente sowie allgemein erhältlich Bauteile verwendet werden. Dabei ist vorgesehen, daß nur eine Kolbenstange am Kolben angeordnet ist, daß symmetrische Elemente mit am Ende liegenden Befestigungsanordnungen verwendet werden und dgl. Der Stand der Technik offenbart nur einteilige Kolbenstangen.

Weitere Vorteile und Merkmale der Erfindung ergeben sich aus der folgenden Beschreibung anhand der Figur. Dabei zeigt:

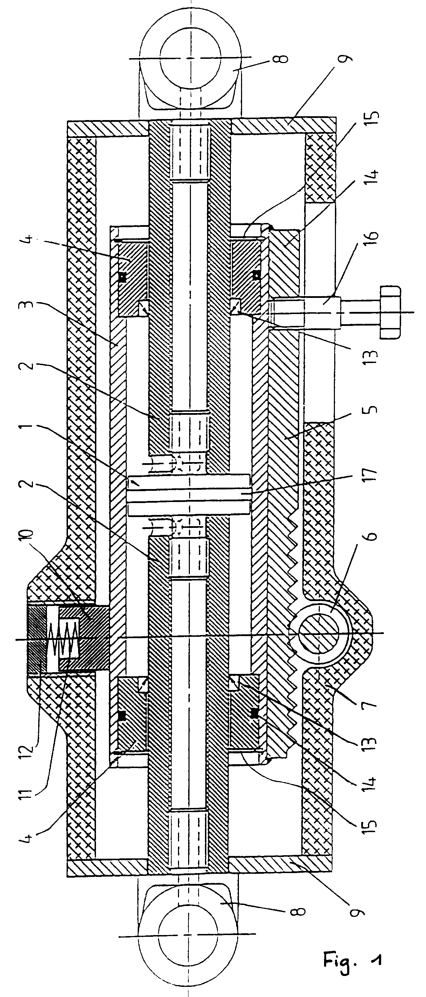

- Figur 1: eine schematische Schnittdarstellung eines Ausführungsbeispiels eines Lenkgetriebes.

Das in der Figur 1 gezeigte Lenkgetriebe umfaßt einen Kolben 1, vorzugsweise im Sinterverfahren hergestellt, an dessen beiden Seiten jeweils eine rohrförmig ausgebildete Kolbenstange 2 angeordnet ist. Im gezeigten Ausführungsbeispiel sind die Kolbenstangen mit den seitlichen Kolbenelementen verschraubt. Im Bereich der Anbindung der Kolbenstange an den Kolben ist jeweils eine Radialbohrung angeordnet, welche das Kolbenstangeinnere mit der jeweiligen im Zylinderrohr 3 ausgebildeten Kammer auf beiden Seiten des Kolbens verbindet. Am jeweils anderen Ende der beiden Kolbenstangen 2 sind Halter 8 ausgebildet, und zwar im gezeigten Ausführungsbeispiel in Form eines Befestigungsauges. In das Befestigungsauge kann eine Hohlschraube eingesetzt werden, so daß Hydraulikdruck durch die Hohlschraube, eine durch das Befestigungsauge 8 ins Innere der Kolbenstange 2 führende Bohrung, durch die Kolbenstange 2 hindurch und durch die Radialbohrung in die jeweilige Zylinderkammer geführt werden kann.

Das Zylinderrohr 3 weist an beiden Seiten Dichtungsbuchsen 4 auf, mit welcher der Zylinder hydraulisch gegenüber den Kolbenstangen abgedichtet ist und sich beiderseits des Kolbens 1 die Zylinderkammern ergeben. Die Dichtungsbuchsen 4 weisen einen nach innen weisenden Dichtring 13 auf und sind in einem Endabschnitt des Zylinderrohrs 3 mit vergrößertem Durchmesser eingesetzt. Gegenüber der Zylinderrohrwandung sind im gezeigtem Ausführungsbeispiel O-Ringe 14, sowie zur ortsfesten Fixierung der Buchsen sogenannte Seeger-Ringe 15 angeordnet.

An dem Zylinderrohr 3 ist ein sich über dessen Längsrichtung erstreckendes Zahnsegment 5 angeordnet, welches einerseits eine Verzahnung aufweist, andererseits eine Gewindebohrung, in welche eine Schraube 16 zur Spurstangenanbindung einsetzbar ist.

Das Zahnsegment 5 kämmt mit einem Ritzel 6 einer nicht weiter gezeigten Lenkung. Das Gesamtsystem ist im gezeigten Ausführungsbeispiel in ein Gehäuse 7 eingesetzt, welches fest mit den Kolbenstangen 2 verbunden ist und dem Ritzelaufnahmeraum gegenüberliegend ein Druckstück 10 aufweist, welches mit einer Druckstückfeder gegenüber einem Druckstückdeckel vorgespannt ist und somit den Zylinder 3 mit dem daran angeordneten Zahnsegment 5 an das Ritzel 6 herandrückt. Eine längliche Öffnung im Gehäuse 7 macht die Gewindebohrung für die Spurstangenanbindung in Form der Schraube 16 zugänglich und die Schraube 16 nach jeder Hubseite voll beweglich.

Die hydraulische Dichtung wird durch einen auf den Kolben 1 aufgesetzten Kolbenring bewirkt. Die beschriebene Ausgestaltung vermeidet das Auftreten eines hydraulischen Driftens durch Leckage, so daß keine wie im Stand der Technik erforderlichen Vorrichtungen zur Fixierung der Zahnstange eingesetzt werden müssen.

Das Gehäuse kann auch als einfaches schmales Gehäuse im Bereich des Ritzelaufnahmeraums ausgebildet sein und seinerseits ortsfest im Fuktionsbereich, beispielsweise einem KFZ angeordnet werden.

Der Aufbau des beschriebenen Lenkgetriebes ist überaus einfach und es können eine geringe Anzahl gleicher Bauteile verwendet werden. Die Baulänge ist um mindestens zwei Hublängen verkürzt und die Druckzuführung optimiert. Die Herstellung und die Montage sind überaus einfach und die Bewegung des Zylinderrohrs 3 gegenüber dem über die Befestigungen 8 und die Kolbenstangen 2 fixierten Kolben 1 über lange Zeit störungsfrei möglich.

### Bezugszeichenliste

- 1: Kolben
- 2: Kolbenstange
- 3: Zylinderrohr
- 4: Buchse
- 5: Zahnsegment
- 6: Ritzel
- 7: Gehäuse
- 8: Halter
- 9: Deckel
- 10: Druckstück
- 11: Druckstückfeder
- 12: Druckstückdeckel
- 13: Dichtring
- 14: O-Ring
- 15: Seeger-Ring
- 16: Schraube
- 17: Kolbenring

## Patentansprüche

1. Lenkgetriebe mit einer mit Hydraulikdruck beaufschlagbaren Zylinder/Kolbenanordnung (1, 3), einer mit einem Ritzel (6) einer Lenkung in Eingriff bringbaren Verzahnung und einer Spurstangenanbindung, wobei die Verzahnung und die Spurstangenanbindung an dem Zylinder (3) angeordnet sind, welcher gegenüber dem orstfest fixierbaren Kolben (1) bewegbar ist,
**dadurch gekennzeichnet,**
daß die Verzahnung durch ein auf der Zylinderaußenseite befestigtes Zahnsegment (5) gebildet ist, in das eine Spurstangenanbindung integriert ist.

2. Lenkgetriebe nach Anspruch 1, dadurch gekennzeichnet, daß der Zylinder einen rohrförmigen Querschnitt hat.

3. Lenkgetriebe nach einem der vorhergehenden Ansprüche, dadurch gekennzeichnet, daß an dem Kolben wenigstens eine aus dem Zylinder ragende Kolbenstange (2) angeordnet ist.

4. Lenkgetriebe nach einem der vorhergehenden Ansprüche, dadurch gekennzeichnet, daß die Kolbenstangen auf beiden Seiten des Kolbens (1) symmetrische Bauteile sind.

5. Lenkgetriebe nach einem der vorhergehenden Ansprüche, dadurch gekennzeichnet, daß die Kolbenstangen an ihren vom Kolben wegweisenden Ende eine Befestigungsanordnung aufweisen.

6. Lenkgetriebe nach einem der vorhergehenden Ansprüche, dadurch gekennzeichnet, daß die Kolbenstangen rohrförmig sind.

7. Lenkgetriebe nach einem der vorhergehenden Ansprüche, dadurch gekennzeichnet, daß die Kolbenstangen zur Druckmediumzuführung durchflossen sind.

8. Lenkgetriebe nach einem der vorhergehenden Ansprüche, dadurch gekennzeichnet, daß die Spurstangenanbindung durch eine Bohrung gebildet ist.

9. Lenkgetriebe nach einem der vorhergehenden Ansprüche, dadurch gekennzeichnet, daß die Verzahnung an der Zylinderaußenseite ausgebildet ist.

10. Lenkgetriebe nach einem der vorhergehenden Ansprüche, dadurch gekennzeichnet, daß der Kolben ein Sinterbauteil ist.

## Claims

1. Steering mechanism having a cylinder/piston arrangement (1, 3) which can be acted upon by hydraulic pressure, a toothing system which can be brought into engagement with a pinion (6) of a steering system, and a track rod link, wherein the toothing system and the track rod link are disposed on the cylinder (3) which is movable in relation to the piston (1) which can be fixed in a stationary manner,
characterised in that
the toothing system is formed by a toothed segment (5) which is fastened on the outside of the cylinder and into which a track rod link is integrated

2. Steering mechanism according to claim 1, characterised in that the cylinder has a tubular cross-section.

3. Steering mechanism according to one of the preceding claims, characterised in that at least one piston rod (2) projecting out of the cylinder is disposed on the piston.

4. Steering mechanism according to one of the preceding claims, characterised in that the piston rods on the two sides of the piston (1) are symmetrical components.

5. Steering mechanism according to one of the preceding claims, characterised in that the piston rods have a fastening arrangement at their end which points away from the piston.

6. Steering mechanism according to one of the preceding claims, characterised in that the piston rods are tubular.

7. Steering mechanism according to one of the preceding claims, characterised in that the piston rods have pressure medium flowing through them for the purpose of supplying the said medium.

8. Steering mechanism according to one of the preceding claims, characterised in that the track rod link is formed by a bore.

9. Steering mechanism according to one of the preceding claims, characterised in that the toothing system is constructed on the outside of the cylinder.

10. Steering mechanism according to one of the preceding claims, characterised in that the piston is a sintered component.

## Revendications

1. Mécanisme de direction, comprenant un ensemble à cylindre/piston (1, 3) pouvant être soumis à une pression hydraulique, une denture pouvant être mise en prise avec un pignon (6) d'une direction et une liaison à une barre d'accouplement, la denture et la liaison à une barre d'accouplement étant disposées sur le cylindre (3) qui est déplaçable par rapport au piston (1) pouvant être immobilisé en position fixe,
caractérisé
en ce que la denture est formée d'un segment denté (5) fixé sur le côté extérieur du cylindre et dans lequel une liaison à une barre d'accouplement est intégrée.

2. Mécanisme de direction selon la revendication 1, caractérisé en ce que le cylindre a une section tubulaire.

3. Mécanisme de direction selon l'une des revendications précédentes, caractérisé en ce qu'au moins une tige de piston (2) qui dépasse du cylindre est disposée sur le piston.

4. Mécanisme de direction selon l'une des revendications précédentes, caractérisé en ce que les tiges de piston sont des composants symétriques, situés sur les deux côtés du piston (1).

5. Mécanisme de direction selon l'une des revendications précédentes, caractérisé en ce que les tiges de piston présentent une structure de fixation qui est située à leur extrémité tournée à l'opposé du piston.

6. Mécanisme de direction selon l'une des revendications précédentes, caractérisé en ce que les tiges de piston sont tubulaires.

7. Mécanisme de direction selon l'une des revendications précédentes, caractérisé en ce que les tiges de piston sont parcourues intérieurement par une circulation pour l'admission du fluide comprimé.

8. Mécanisme de direction selon l'une des revendications précédentes, caractérisé en ce que la liaison à la barre d'accouplement est formée d'un alésage.

9. Mécanisme de direction selon l'une des revendications précédentes, caractérisé en ce que la denture est réalisée sur le côté extérieur du cylindre.

10. Mécanisme de direction selon l'une des revendications précédentes, caractérisé en ce que le piston est un composant fritté.
